# EUROPÄISCHE PATENTANMELDUNG

(11) **EP 1 258 326 A2**
(43) Veröffentlichungstag der Anmeldung: **20.11.2002**
(21) Anmeldenummer: 02010637.3
(22) Anmeldetag: 11.05.2002
(51) Int. Cl.: B26D 7/06

(54) **Schneidvorrichtung für stabförmige Lebensmittel mit einem Speicher für das Schneidgut**

(30) Priorität: 18.05.2001 DE 20108479 U
(71) Anmelder: SILLER, Rudi, 74232 Abstatt (DE)
(72) Erfinder: SILLER, Rudi, 74232 Abstatt (DE)
(74) Vertreter: Müller, Hans, Dipl.-Ing.

(57) **Zusammenfassung**

Einer Schneidvorrichtung (10) für Schneidgut (26) in Form von stabförmigen Lebensmitteln, wie insbesondere für tierisches Schneidgut, ist ein Speicher (18) für das Schneidgut (26) ihrer Schneideinrichtung (32) in Verarbeitungsrichtung (14) vorgelagert.

## Beschreibung

### TECHNISCHES GEBIET

Die Erfindung betrifft eine Schneidvorrichtung für Schneidgut, das in Form von stabförmigen Lebensmitteln, wie insbesondere für tierisches Schneidgut, vorliegt. Mit derartigen Schneidvorrichtungen können Scheiben von Fleisch, Rouladen, Kotteletts, Braten, Wurstwaren, Aufschnitt, Fisch oder Käse aus entsprechend langen stabförmigen Lebensmitteln geschnitten werden. Derartige Schneidvorrichtungen werden in der Lebensmittel-Industrie, beispielsweise der Fleischerei-Industrie im dauerhaften Einsatz verwendet. Die Scheibenstärke und die Anzahl der zu schneidenden Scheiben können entsprechend dem jeweiligen Verwendungszweck variabel eingestellt werden.

### STAND DER TECHNIK

Es ist eine Schneidvorrichtung der eingangs genannten Art in Form einer Schneidmaschine bekannt. Die Schneidmaschine besitzt eine Schneideinrichtung in Form eines rotierenden Messers. Über einen Vorschubkanal wird das jeweilige Schneidgut der Schneideinrichtung zugeführt. Zum Transport des Schneidgutes innerhalb des Vorschubkanals dient eine rückwärtig an dem Schneidgut anliegende Vorschubeinrichtung.

Von der Schneideinrichtung fallen die Scheiben nacheinander auf ein umlaufendes Förderband. Ist das stabförmige Schneidgut vollständig durch die Schneideinrichtung hindurchgeschoben und in entsprechende Scheiben geschnitten worden, fährt die Vorschubeinrichtung zurück, so dass ein neues stabförmiges Lebensmittel in den Vorschubkanal hineingelegt werden kann. Die jeweils geschnittenen Scheiben werden von einer Bedienperson von dem umlaufenden Förderband abgenommen und einer wegführenden Fördereinrichtung zugeführt. Für das Beladen und für das Entladen der Schneidmaschine sind zwei Personen erforderlich.

### DARSTELLUNG DER ERFINDUNG

Ausgehend von diesem vorbekannten Stand der Technik liegt der Erfindung die Aufgabe zugrunde, eine verbesserte Schneidvorrichtung anzugeben.

Diese Erfindung ist durch die Merkmale des Anspruchs 1 gegeben. Sinnvolle Weiterbildungen der Erfindung sind Gegenstand von sich an den Anspruch 1 anschließenden weiteren Ansprüchen.

Die Erfindung benutzt einen Speicher für das Schneidgut, der in Verarbeitungsrichtung der Schneideinrichtung einer Schneidmaschine vorgelagert ist. Damit lässt sich eine gewisse Personalreduzierung ermöglichen. So braucht während der Zeit, die zum Zerschneiden der in dem Speicher vorrätig gehaltenen Lebensmittel benötigt wird, keine Person zum Beladen der Schneidmaschine vorhanden zu sein; die Schneidmaschine kann nämlich aus dem Speicher heraus entsprechend ihrer Verarbeitungsgeschwindigkeit mit jeweils neuem stabförmigen Schneidgut versorgt werden. Erst wenn kein Schneidgut mehr in dem Speicher vorrätig vorhanden ist, wird wieder eine Person zum Beladen des Speichers benötigt. Diese zum Beladen des Speichers und damit letztendlich der Schneidmaschine benötigte Person wird also nicht kontinuierlich, sondern nur taktweise benötigt. Das ermöglicht es, diese Person auch anderweitig zu beschäftigen.

Es hat sich als vorteilhaft herausgestellt, das zu schneidende Schneidgut vor dem Zerschneiden zu kühlen. So kann besonders gleichförmiges Schneidgut erhalten werden, wenn die äußere Schicht des Schneidguts angefroren ist. Es hat sich herausgestellt, dass sich stangenförmige Fleischknochen besonders gut in "Rippchen" zerlegen lassen, wenn sie ca. 20 Minuten auf etwa -28°C (Grad Celsius) gekühlt worden sind. Vorzugsweise ist daher vorgesehen, eine entsprechende Kühleinrichtung zum Kühlen des Speicherinhalts des im Einlaufbereich der Schneidmaschine vorhandenen Speichers vorzusehen.

Nach einer besonderen Weiterbildung der Erfindung ist diese Kühleinrichtung bei einem speziellen Kühlspeicher vorgesehen. Dieser Kühlspeicher ist zusätzlich zu dem Speicher vorhanden und ist zwischen dem Speicher und der Schneideinrichtung positioniert. Aus dem Speicher wird das dort eingelagerte stabförmige Schneidgut in den Kühlspeicher überführt und dort auf die beispielsweise -28°C abgekühlt, wobei die Verweildauer in dem Kühlspeicher nicht zu lange ist, so dass nur die äußere Schicht des Schneidgutes entsprechend abgekühlt wird. Von dem Kühlspeicher wird dann das entsprechend vorgekühlte Schneidgut in den Vorschubkanal der Schneidmaschine überführt. Mit einer derartigen Schneidmaschine kann nicht nur - wie bereits eingangs ausgeführt - eine Arbeitsperson teilweise eingespart werden, sondern es können darüber hinaus auch besonders gleichmäßige Scheiben geschnitten werden. Der zum Speicher separate Kühlspeicher erweist sich im Betrieb besonders wirtschaftlich, da sein Inhalt nur so groß sein muss, dass das Schneidgut in gewünschter Weise abgekühlt wird. Ein darüber hinausgehender Speicherbedarf ist nicht erforderlich; das eigentliche Speichern übernimmt der dem Kühlspeicher in Transportrichtung vorgelagerte Vorrats-Speicher.

Beim Betrieb von mehreren derartigen Schneidvorrichtungen kann die Person, die lediglich zeitweise zum Beladen des eingangsseitig vorhandenen Speichers benötigt wird, dazu eingesetzt werden, weitere entsprechende Speicher von weiteren Schneidmaschinen zu beladen. Eine Person ist dann an der jeweiligen Entnahmestelle der Schneidmaschine vorhanden, während eine einzige andere Person zum Beladen der verschiedenen Speicher der mehreren Schneidmaschinen erforderlich ist.

Nach einer wesentlichen Weiterbildung der Erfindung kann ein weiterer Speicher in Verarbeitungsrichtung der Schneideinrichtung nachgelagert werden. Von der Schneideinrichtung werden die einzelnen Scheiben nicht von einer Bedienperson aufgenommen und in weiterführende Transporteinrichtungen gelegt, sondern die einzelnen Scheiben wandern automatisch in den weiteren Speicher hinein. Bei taktweiser Befüllung beziehungsweise Entnahme des jeweiligen Speicherinhalts kann erreicht werden, dass eine einzige Person nur noch benötigt wird. Diese Person ist dann entweder damit beschäftigt, den eingangsseitig der Schneidmaschine vorhandenen Speicher zu befüllen oder den ausgangsseitig der Schneidmaschine vorhandenen weiteren Speicher zu entleeren.

Als vorteilhaft hat es sich herausgestellt, den Speicherinhalt des Speichers beziehungsweise des weiteren Speichers variabel zu gestalten. Dies kann beispielsweise durch sogenannte, im Stand der Technik an sich bekannte Gondelspeicher erreicht werden.

Gondelspeicher besitzen ein endlos umlaufendes Fördermittel, an dem beispielsweise in Form von Gondeln Transportbehälter für das in den Speicher einzulagernde beziehungsweise aus dem Speicher wieder auszulagernde Speichergut angehängt sind. Die Umlaufgeschwindigkeit des endlos umlaufenden

Fördermittels kann durch Verstellen eines integrierten Schlittens so variiert werden, dass die Transportgeschwindigkeit vor dem Schlitten unterschiedlich ist zur Transportgeschwindigkeit nach dem Schlitten, und umgekehrt. So kann im Einlaufbereich der Gondeln die Transportgeschwindigkeit auf den Betrag "Null" herabgesetzt werden, während gleichzeitig im Entladebereich (Auslaufbereich) des Speichers mit gleichförmiger Geschwindigkeit Schneidgut dem Speicher entnommen wird. Das bedeutet, dass während dieses Zustandes das Beladen der Gondeln des Speichers nicht erforderlich ist. Umgekehrt kann die Transportgeschwindigkeit der Gondeln im Einlaufbereich auch wesentlich über die Transportgeschwindigkeit der Gondeln im Auslaufbereich erhöht werden, so dass das Wiederbeladen eines entleerten Speichers relativ kurzfristig erfolgen kann. Beim weiteren Speicher würde das Vorstehende umgekehrt gelten: So könnte die Transportgeschwindigkeit der Gondeln im Einlaufbereich einen konstanten Betrag beibehalten, der abhängig wäre von der Arbeitsgeschwindigkeit der Schneidmaschine, während im Auslaufbereich dieses weiteren Speichers die Transportgeschwindigkeit der Gondeln zwischen dem Betrag "Null" und einem hohen Wert schwanken könnte. Auf diese Weise könnte eine einzige Person die Schneidvorrichtung sowohl beladen als auch entladen.

Auch der Kühlspeicher besitzt, wie in der Zeichnung näher dargestellt ist, ein endlos umlaufendes Fördermittel. Sein Speicherinhalt braucht aber nicht variabel ausgelegt zu sein. Variabel kann nach einer Weiterbildung lediglich die Kühlleistung und beziehungsweise oder die Transportgeschwindigkeit des Transportmittels sein, um die gewünschte Kühlleistung optimal einstellen zu können.

Als Übergabeeinrichtung für das Schneidgut, um dasselbe aus dem Speicher beziehungsweise dem Kühlspeicher in den Vorschubkanal der Schneidmaschine zu transportieren, hat sich nach einer Ausführungsform der Erfindung eine Zuggabel als günstig herausgestellt. Die Zuggabel kann von außen in den Speicher hineintauchbar ausgebildet sein. Auf diese Weise kann mit Hilfe einer am freien Ende der Zuggabel klappbar ausgebildeten Schiebewand das Schneidgut aus dem Speicher herausgeschoben und in den Vorschubkanal hineingeschoben werden. Um ein bodengleiches Verschieben des Schneidgutes aus einer bereitstehenden Gondel des Speichers in den Vorschubkanal zu ermöglichen, kann die der Gondel benachbarte Seitenwand des Vorschubkanals in eine den Boden des Vorschubkanals vergrößernde Lage gebracht, wie insbesondere geklappt werden. Darüber hinaus können die geschnittenen Scheiben mit Hilfe einer vergleichbaren Zuggabel in einen auslaufseitig der Schneidmaschine vorhandenen weiteren Speicher hineingeschoben werden.

Der Speicher kann auch so ausgebildet werden, dass jede seiner Gondeln in eine den Vorschubkanal ganz oder teilweise ersetzende oder als Vorschubkanal ganz oder teilweise dienende Lage bringbar ist.

Weitere Ausgestaltungen und Vorteile der Erfindung sind den in den Ansprüchen weiterhin aufgeführten Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine perspektivische Ansicht einer ersten Ausführungsform einer erfindungsgemäßen Schneidmaschine,
- Fig. 2: eine perspektivische Ansicht einer zweiten Ausführungsform einer erfindungsgemäßen Schneidmaschine,
- Fig. 3: eine dritte Ausführungsform einer erfindungsgemäßen Schneidmaschine,
- Fig. 4: eine vierte Ausführungsform einer erfindungsgemäßen Schneidmaschine.

### WEGE ZUM AUSFÜHREN DER ERFINDUNG

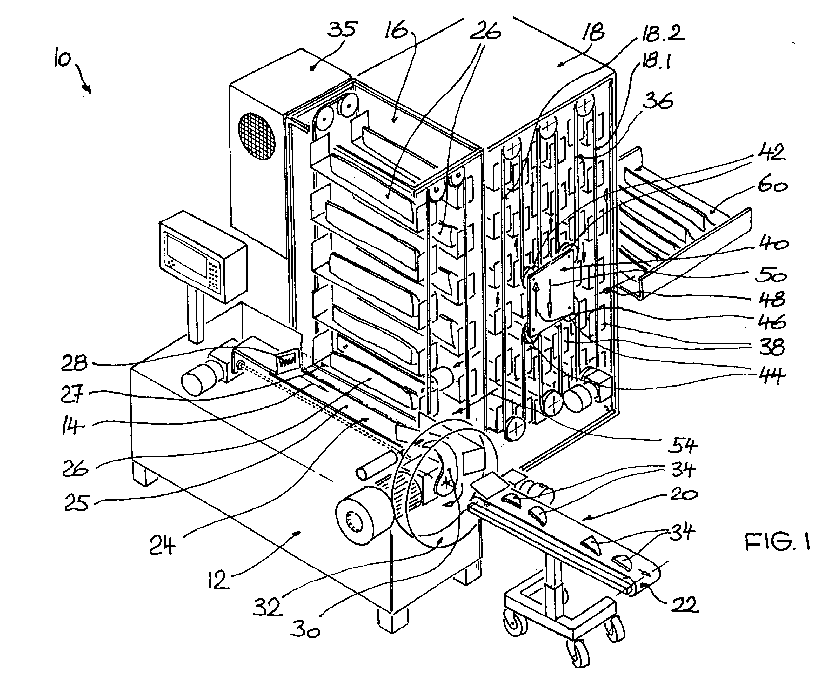

Die Schneidvorrichtung 10 besitzt gemäß Fig. 1 eine Schneidmaschine 12, der in Transportrichtung 14 ein Kühlspeicher 16 und demselben nochmals ein Speicher 18 vorgelagert ist. Der Schneidmaschine 12 ist in Transportrichtung 14 nachgelagert eine Transporteinrichtung 20 mit einem endlos umlaufenden Förderband 22.

Die Schneidmaschine 12 besitzt einen Vorschubkanal 24, in den jeweils ein stabförmiges Schneidgut 26 eingelagert werden kann. Mit der Hilfe eines hinten an dem stabförmigen Schneidgut 26 anliegenden Schiebers 28 wird das Schneidgut 26 in dem Vorschubkanal 24 in Transportrichtung 14 durch eine ein rotierendes Messer 30 aufweisende Schneideinrichtung 32 hindurchgedrückt. Von der Schneideinrichtung 32 wird das stabförmige Schneidgut 26 in einzelne Scheiben 34 zerteilt. Diese Scheiben 34 fallen aus der Schneideinrichtung 32 auf das Förderband 22. Von dem Förderband 22 werden die Scheiben 34 entnommen und einer zeichnerisch nicht näher dargestellten weiteren Transporteinrichtung zugeführt.

Nachdem ein stabförmiges Schneidgut 26 vollständig von der Schneideinrichtung 32 zerteilt ist, fährt der Schieber 28 wieder zurück in seine in Fig. 1 dargestellte Position. Es wird dann ein weiteres stabförmiges Schneidgut in den Vorschubkanal 24 eingelegt und dasselbe in gleicher Weise durch die Schneideinrichtung 32 dann zerteilt.

Auf dem Förderband 22 kommen die geschnittenen Scheiben daher taktweise an. Im vorliegenden Fall würde ein stabförmiges Schneidgut 26 lediglich in zwei Scheiben 34 zerteilt werden. Dabei können die Scheiben 34, wie in Fig. 1 dargestellt, voneinander beabstandet auf dem Förderband 22 liegen; es ist allerdings möglich und das wird der Regelfall sein, dass die Scheiben 34 schuppenartig an- beziehungsweise übereinanderliegend - zu wesentlich mehr als zwei Stück - auf dem Förderband 22 vorhanden sind.

Der Kühlspeicher 16 besitzt ein Kühlaggregat 35, über das der Innenraum des Kühlspeichers 16 gekühlt werden kann. In dem Kühlspeicher 16 ist ein endlos umlaufendes Fördermittel 36 vorhanden, an dem einzelne Gondeln 38 befestigt sind. In jeder dieser einzelnen Gondeln 38 liegt ein stabförmiges Schneidgut 26.

Die Verweildauer der stabförmigen Schneidgüter 26 in dem Kühlspeicher 16 ist derart, dass die äußere Schicht der einzelnen Schneidgüter 26 auf im vorliegenden Beispielsfall etwa -28°C gekühlt ist. Dies entspricht einer Verweilzeit von etwa 20 Minuten für übliche Schweinefleisch-Stücke, aus denen Rippchen geschnitten werden sollen.

Dem Kühlspeicher 16 ist in Transportrichtung 14 ein Speicher 18 vorgelagert. Dieser ist ähnlich dem Kühlspeicher 16 aufgebaut. Auch er besitzt ein endlos umlaufendes Fördermittel 36, an dem einzelne Gondeln 38 zur Aufnahme der stabförmigen Schneidgüter 26 befestigt sind. Zusätzlich ist bei dem Speicher 18 ein Schlitten 40 vorgesehen, der mit an seinem oberen Ende vorhandenen zwei Rollen 42 und mit an seinem unteren Ende vorhandenen zwei Rollen 44 in die schlingenartig angeordneten Fördermittelabschnitte integriert ist. Ein solcher, sogenannter Gondelspeicher 18, ist im Stand der Technik dem Grunde nach bekannt. Beim Hochfahren 46 des Schlittens 40 kann die Geschwindigkeit des auf der Eingangsseite 48 (Einlaufbereich) des Speichers 18 vorhandenen Fördermittelabschnitts 18.1 bis auf den Betrag "Null" abgesenkt werden. Durch Herunterfahren 50 des Schlittens 40 kann die entsprechende Geschwindigkeit dieses Fördermittelabschnitts 18.1 extrem gesteigert werden. Unabhängig von dem Hochfahren 46 oder Herunterfahren 50 des Schlittens 40 kann die Geschwindigkeit des auf der Ausgangsseite 54 (Auslaufbereich) vorhandenen Fördermittelabschnitts 18.2 konstant beibehalten bleiben. Der Speicher 18 ist also in der Lage, den Kühlspeicher 16 in gleichen Taktschritten zu beladen, so dass der Kühlspeicher 16 in entsprechenden Taktschritten seinen Inhalt der Schneidmaschine 12 zuführen kann. Sobald der Speicher 18 sich maximal geleert hat, was bedeutet, dass der Schlitten 40 extrem weit nach oben hochgefahren 46 ist, wird der Schlitten wieder heruntergefahren 50 und dabei über die Eingangsseite 48 der Speicher 18 wieder befüllt. Das Befüllen kann extrem schnell erfolgen, da es unabhängig ist von der Transportgeschwindigkeit des Fördermittelabschnittes 18.2 auf der Ausgangsseite 54 des Speichers 18.

Im vorliegenden Fall erfolgt das Beladen über ein lineares Förderband 60.

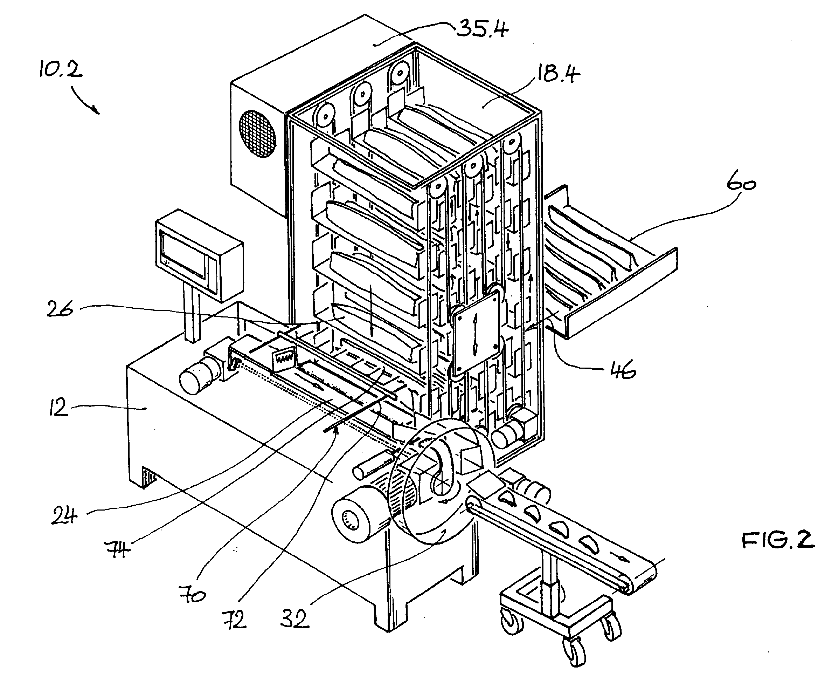

Die in Fig. 2 dargestellte Schneidvorrichtung 10.2 entspricht prinzipiell der in Fig. 1 dargestellten Schneidvorrichtung 10, unterschiedlich ist lediglich, dass das vorhandene Kühlaggregat 35.4 zum Kühlen des Inhalts eines einzigen Gondelspeichers 18.4 verwendet wird. Ein separater Kühlspeicher ist nicht vorhanden.

Die bei der Schneidvorrichtung 10.2 vorhandene Übergabevorrichtung 70 zum Überführen von stabförmigem Schneidgut 26 in den Vorschubkanal 24 der Schneidmaschine 12 ist auch bei der Schneidvorrichtung 10 vorhanden.

Die Übergabevorrichtung 70 besitzt eine stabförmige Zuggabel 72, an deren freiem Ende eine Schiebewand 74 klappbar befestigt ist. Im heruntergeklappten Zustand, der in Fig. 2 erkennbar ist, kann durch Zurückziehen der Zuggabel 72 aus dem Speicher 18.4 heraus ein an der Ausgabeseite des Speichers vorhandenes stabförmiges Schneidgut 26 auf den Vorschubkanal 24 geschoben werden. Das Eintauchen der Zuggabel 72 von außen in den Speicher 18.4 hinein erfolgt mit hochgeklappter Schiebewand 74, um ein Anstoßen an dem jeweils herauszuziehenden Schneidgut 26 zu verhindern. Beim Verschieben des Schneidgutes 26 von jeweils einer Gondel 38 auf den Boden 25 des Vorschubkanals 24 ist die der Gondel 38 benachbarte Seitenwand 27 des Vorschubkanals 24 um etwa 90° (Grad) nach außen heruntergeklappt. Diese Seitenwand 27 bildet damit eine Brücke zwischen dem Boden 25 des Vorschubkanals 24 und dem Boden der betreffenden Gondel 38.

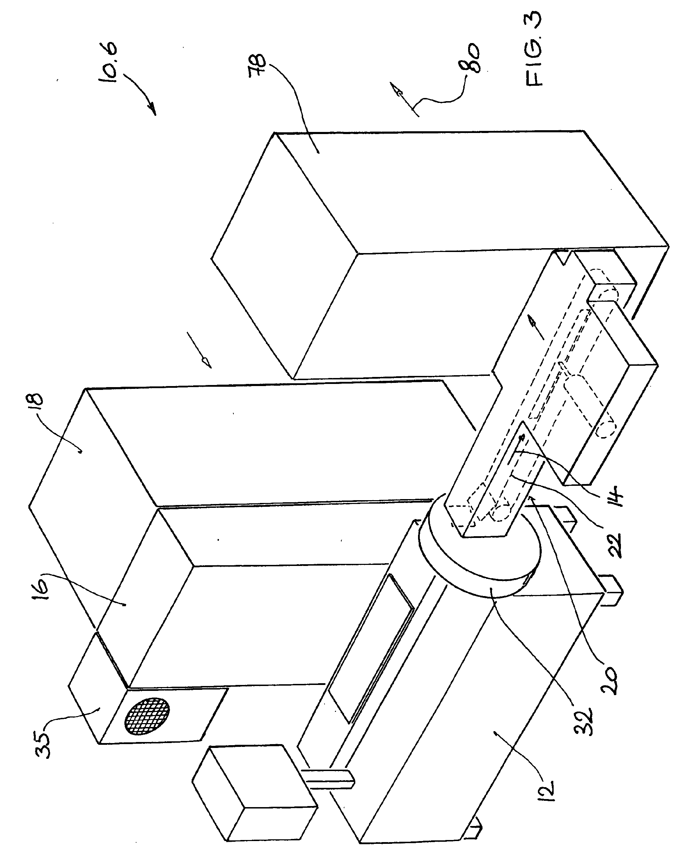

Bei der in Fig. 3 dargestellten Schneidvorrichtung 10.6 ist zusätzlich zu dem Speicher 18 und dem Kühlspeicher 16 mit seinem Kühlaggregat 35 ein weiterer Speicher 78 vorhanden. Dieser Speicher 78 entspricht aufbaumäßig dem Speicher 18 und befindet sich im Auslaufbereich der Schneidmaschine 12. Mit Hilfe einer Schiebeplatte 82 können auf dem Förderband 22 der Transporteinrichtung 20 vorhandene Scheiben 34 (vgl. Fig. 1) quer zur Transportrichtung 14 in den Speicher 78 hineingeschoben werden, in vergleichbarer Weise, wie aus dem Speicher 18 stabförmiges Schneidgut 26 entnommen wird. Auf der Ausgangsseite 80 kann der Speicherinhalt des Speichers 78 taktweise entnommen werden. Eine einzige Bedienperson kann also den eingangsseitig der Schneidmaschine 12 vorhandenen Speicher 18 befüllen und anschließend den ausgangsseitig vorhandenen Speicher 78 entleeren. Anschließend kann diese Bedienperson dann wieder den Speicher 18 befüllen. Leere Gondelplätze in den Speichern 18, 78 brauchen trotz ununterbrochenem Betrieb der Schneideinrichtung 32 nicht aufzutreten, wenn die Transportgeschwindigkeit des Fördermittelabschnittes 18.1 des Speichers 18 beim Entladen des anderen Speichers 78 auf den Betrag "Null" gesetzt wird; und umgekehrt die Transportgeschwindigkeit des Fördermittelabschnittes im Auslaufbereich 80 des Speichers 78 auf den Betrag "Null" gesetzt wird während des Beladens des Speichers 18.

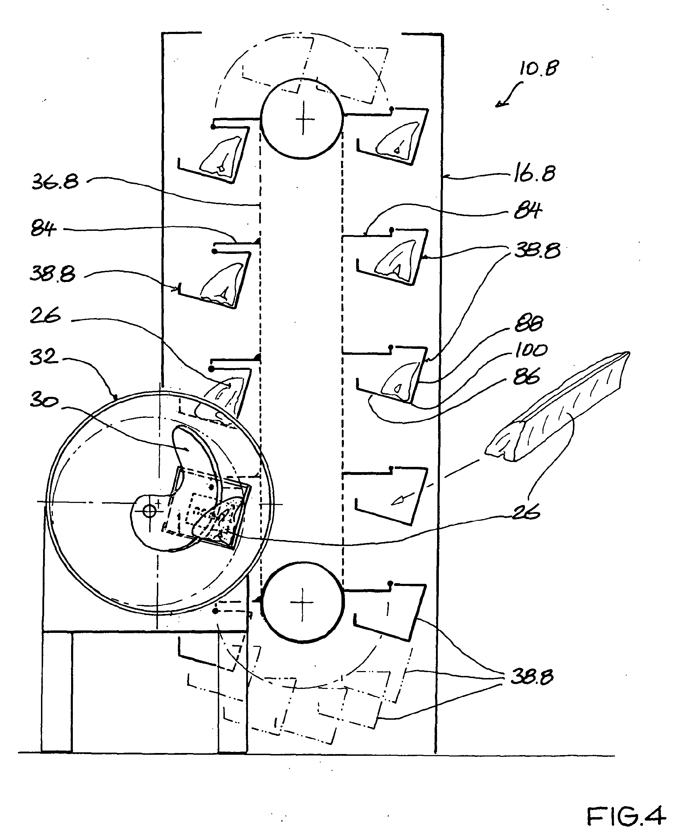

Bei der in Fig. 4 dargestellten Schneidvorrichtung 10.8 ist ein der Schneideinrichtung 32 vorgelagerter Speicher, der im vorliegenden Beispielsfall ein Kühlspeicher 16.8 sein soll, vorhanden. Die einzelnen Gondeln 38.8 dieses Speichers 16.8 sind jeweils über Halteglieder 84 seitlich auskragend an dem umlaufenden Fördermittel 36.8 befestigt.

Die Gondeln 38.8 können jeweils in eine Lage in Transportrichtung vor der Schneideinrichtung 32 gebracht werden, in der sie als Vorschubkanal für das in ihnen eingelagerte Schneidgut 26 dienen können. Bei der in Fig. 4 dargestellten Situation braucht also ein separater Vorschubkanal nicht vorhanden zu sein. Der das Schneidgut 26 in dem "Vorschubkanal", das heißt im Vorliegenden in der Gondel 38.8 in Richtung auf die Schneideinrichtung 32 schiebende Schieber 28 (vgl. Fig. 1) schiebt das Schneidgut 26 unmittelbar aus der Gondel 38.8 heraus und in die Schneideinrichtung 32 hinein. Eine Übergabevorrichtung zwischen der jeweiligen Gondel und einem Vorschubkanal wird damit überflüssig. Um die freie Zugänglichkeit des Schiebers 28 zu dem Schneidgut 26 zu ermöglichen, ist im Gegensatz zu den vorstehenden Ausführungsformen die Gondel außermittig zum umlaufenden Fördermittel 36 positioniert.

Um eine bessere Ausrichtung des Schneidguts 26 relativ zum rotierenden Messer 30 der Schneideinrichtung 32 zu ermöglichen, sind die Gondeln 38.8 etwas im Uhrzeigersinn gekippt vorhanden. Ein in der Gondel platziertes Schneidgut 26 wird also in den Bereich ihrer rechten unteren Ecke 100 hinrutschen, die den Übergang bildet zwischen dem Boden 86 und der rechten Seitenwand 88 jeder Gondel 38.8. Auf die in Fig. 2 dargestellte Übergabevorrichtung 70, den Vorschubkanal 24 und dessen klappbarer Seitenwand 27 (Fig. 1) kann also bei der Schneidvorrichtung 10.8 verzichtet werden.

Statt unmittelbar den Vorschubkanal zu bilden, können die Gondeln auch in eine den Vorschubkanal verlängernde Position gebracht werden. Die Gondeln könnten dann beispielsweise dem Vorschubkanal der Schneidmaschine 12 in Längsrichtung des Vorschubkanals vorgelagert sein.

Es wäre auch möglich, bei einer einen Vorschubkanal besitzenden Schneidvorrichtung die Gondeln jeweils in den Vorschubkanal hineintauchen zu lassen. Auf diese Weise könnte eine einen Vorschubkanal besitzende Schneidmaschine ohne zugeordneten Speicher in üblicher Weise benutzt werden. Diese Schneidmaschine könnte darüber hinaus auch erfindungsgemäß mit einem vorgelagerten Speicher verwendet werden. Es bräuchte dann nur sichergestellt zu werden, dass die in den Vorschubkanal der Schneidmaschine jeweils eingetauchte Gondel auch wieder aus dem Bereich des Vorschubkanals herausbewegt werden kann. Dies könnte beispielsweise durch die vorstehend bereits erwähnte Möglichkeit einer klappbaren Seitenwand des Vorschubkanals mit relativ wenig Aufwand ermöglicht werden. Dabei könnte die Schneideinrichtung 32 relativ zum vorgelagerten Speicher auch so ausgerichtet sein, dass die Übergabegondel sich jeweils im Bereich der unteren Umlenkung des umlaufenden Fördermittels 36.8 befindet.

## Patentansprüche

1. Schneidvorrichtung (10, 10.2, 10.4, 10.6) für Schneidgut (26) in Form von stabförmigen Lebensmitteln, wie insbesondere für tierisches Schneidgut,
- mit einer Schneideinrichtung (32) für das Schneidgut (26),
- mit einem Vorschubkanal (24) zum Zuführen des Schneidgutes (26) der Schneideinrichtung (32),
**dadurch gekennzeichnet, dass**
- ein Speicher (18, 18.4) für das Schneidgut (26) vorhanden ist,
- dieser Speicher (18, 18.4) der Schneideinrichtung (32) in Verarbeitungsrichtung (14) vorgelagert ist.

2. Schneidvorrichtung nach Anspruch 1,
**dadurch gekennzeichnet, dass**
- eine Kühleinrichtung (35, 35.4) zum Kühlen des Speicherinhalts vorhanden ist.

3. Schneidvorrichtung nach Anspruch 1,
**dadurch gekennzeichnet, dass**
- die Kühleinrichtung (35) bei einem Kühlspeicher (16, 16.8) vorhanden ist,
- dieser Kühlspeicher (16) in Verarbeitungsrichtung zwischen dem Speicher (18) und der Schneideinrichtung (32) vorhanden ist.

4. Schneidvorrichtung nach einem der vorstehenden Ansprüche,
**dadurch gekennzeichnet, dass**
- ein weiterer Speicher (78) vorhanden ist,
- dieser weitere Speicher (78) in Verarbeitungsrichtung der Schneideinrichtung (32) nachgelagert ist.

5. Schneidvorrichtung nach einem der vorstehenden Ansprüche,
**dadurch gekennzeichnet, dass**
- der Speicherinhalt des Speichers (18, 18.4) und/oder des weiteren Speichers (78) variabel ist.

6. Schneidvorrichtung nach Anspruch 5,
**dadurch gekennzeichnet, dass**
- der Speicher (18, 18.4) und/oder der weitere Speicher (78) als Gondelspeicher mit einem endlos umlaufenden, einen Schlitten (40) umschlingenden Fördermittel (36) ausgebildet ist, wobei beim Verfahren des Schlittens (40) die Umlaufgeschwindigkeit des Fördermittels (18.1) und damit der Gondeln (38) in Transportrichtung vor dem Schlitten (40) unterschiedlich ist zur Umlaufgeschwindigkeit des Fördermittels (18.2) nach dem Schlitten (40), und umgekehrt.

7. Schneidvorrichtung nach einem der Ansprüche 3 bis 6,
**dadurch gekennzeichnet, dass**
- der Kühlspeicher (16, 16.8) ein endlos umlaufendes Fördermittel (36) besitzt.

8. Schneidvorrichtung nach einem der vorstehenden Ansprüche,
**dadurch gekennzeichnet, dass**
- die Kühlleistung des Kühlaggregates (35, 35.4) und/oder die Transportgeschwindigkeit des Transportmittels (36) variabel einstellbar sind.

9. Schneidvorrichtung nach einem der vorstehenden Ansprüche,
**dadurch gekennzeichnet, dass**
- eine Übergabevorrichtung (70) für das Schneidgut (26) zwischen dem Speicher (18, 18.4) beziehungsweise dem Kühlspeicher (16) und dem Vorschubkanal (24) vorhanden ist.

10. Schneidvorrichtung nach Anspruch 9,
**dadurch gekennzeichnet, dass**
- die Übergabevorrichtung (70) eine Zuggabel (72) besitzt,
- die Zuggabel (72) von außen in den Speicher (18, 18.4). beziehungsweise den Kühlspeicher (16, 16.8) hineintauchbar und aus dem Speicher (18, 18.4) beziehungsweise dem Kühlspeicher (16, 16.8) wieder rückwärts derart herausziehbar ist, dass dadurch ein Schneidgut (26) aus dem Speicher (18, 18.4) beziehungsweise Kühlspeicher (16, 16.8) in den Vorschubkanal (24) transportierbar ist.

11. Schneidvorrichtung nach Anspruch 10,
**dadurch gekennzeichnet, dass**
- die Zuggabel (72) eine klappbare Schiebewand (74) zum Schieben des Schneidgutes (26) in den Vorschubkanal (24) hinein besitzt.

12. Schneidvorrichtung nach einem der Ansprüche 9 bis 11,
**dadurch gekennzeichnet, dass**
- die dem Speicher (18, 18.4) benachbarte Seitenwand (27) des Vorschubkanals (24) in eine den Boden (25) des Vorschubkanals (24) verlängernde Lage bringbar ist.

13. Schneidvorrichtung nach Anspruch 12,
**dadurch gekennzeichnet, dass**
- die Seitenwand (27) des Vorschubkanals (24) klappbar ausgebildet ist.

14. Schneidvorrichtung nach einem der vorstehenden Ansprüche,
**dadurch gekennzeichnet, dass**
- der der Schneideinrichtung (32) vorgelagerte Speicher (16.8) so zu der Schneideinrichtung (32) positioniert ist, dass
- die Gondeln (38.8) jeweils in eine als Vorschubkanal verwendbare Lage bringbar sind.

15. Schneidvorrichtung nach einem der vorstehenden Ansprüche,
**dadurch gekennzeichnet, dass**
- die Gondeln (38.8) des Speichers jeweils in eine Lage bringbar sind, in der sie einen Einsatz für einen der Schneidvorrichtung (32) vorgelagerten Vorschubkanal (24) bilden.

16. Schneidvorrichtung nach einem der vorstehenden Ansprüche,
**dadurch gekennzeichnet, dass**
- die Gondeln (38.8) des Speichers jeweils in eine Lage bringbar sind, in der sie eine Verlängerung eines der Schneideinrichtung (32) vorgelagerten Vorschubkanals (24) bilden.
